# EUROPEAN PATENT SPECIFICATION

(11) **EP 0 379 470 B1**
(45) Date of publication and mention of the grant of the patent: **20.03.1996**
(21) Application number: 90810040.7
(22) Date of filing: 17.01.1990
(51) Int. Cl.: C08L 77/00, C08K 5/00, C08K 5/20, C08K 5/34

(54) **Improved dyeability of synthetic polyamide**
Verbesserte Anfärbbarkeit von synthetischem Polyamid
Affinité pour les colorants de polyamides synthétiques

(30) Priority: 21.01.1989 DE 3901717; 21.01.1989 DE 3901716; 09.09.1989 DE 3930089
(43) Date of publication of application: 25.07.1990
(60) Divisional application: 94109533.3
(73) Proprietor: SANDOZ AG, CH-4002 Basel (CH); SANDOZ-PATENT-GMBH, D-79539 Lörrach (DE)
(72) Inventor: Kaul, Bansi Lal, CH-4105 Biel-Benken (CH); Vougioukas, Angelos Elie, F-68300 St. Louis (FR)

(56) References cited:
- DE-A- 3 233 951
- DE-A- 3 233 953
- FR-A- 2 513 646

## Description

The present invention relates to synthetic polyamides in which are incorporated one or more compounds having at least one sterically hindered amino group and one or two groups reactive to -OH and/or -NH₂.

Similar compounds are known as stabilizers.

DE 32 33 953 A 1 discloses a stabilizer mixture for plastics consisting of A) esters or amides of tetramethylpiperidine and B) alkali salts of hypophosphorus acid.

DE 32 33 951 A 1 discloses a stabilizer mixture for plastics consisting of A) bisamides from squaric acid and amino groups containing derivatives of 2,2,6,6-tetramethylpiperidine and B) alkali salts of hypophosphorous acid.

FR 2.513.646 discloses bis-(2,2,6,6-tetramethylpiperidyl-4-) thiourea compounds as stabilizers for synthetic resins.

It has been found that the dyeability or mass coloration of synthetic polyamides can be improved by incorporating into them a) a compound having at least one sterically hindered amino group selected from the following compounds: -

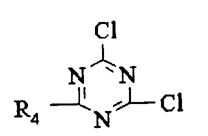

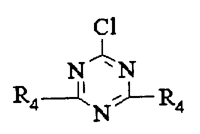

R₄-CO-CH=CH₂

R₄-CO-CH₂CH₂SO₂C₆H₅

R₄-SO₂-CH=CH₂

in which R₄ independently is 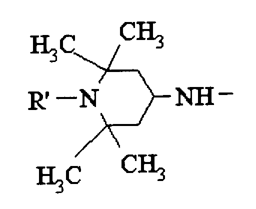 or 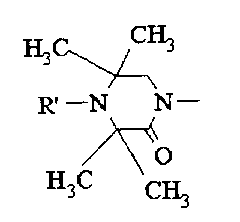 where R' is hydrogen, C₁₋₆alkyl, C₁₋₄alkoxy or -CO-C₁₋₄alkyl. A preferred compound is 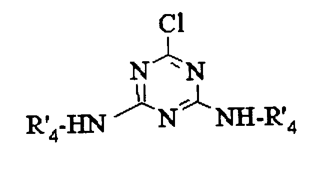 where R'₄ is 2,2,6,6-tetramethylpiperidinyl-4. Also preferred is the following new compound: 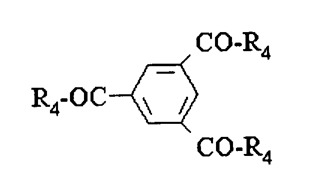 where R₄ is as defined above.

These compounds can be prepared conventionally, e.g. by condensing the appropriate acid chloride or the cyanuric-acid chloride with a free amino or imino group of a sterically hindered amine containing compound in appropriate amounts.

The synthetic polyamides according to the invention can be dyed in the mass with any type of dyestuff, provided that it is stable at high temperatures (of the melt). Preferred dyestuff groups are the monoazometal complexes, in particular the chromium complexes that are sufficiently stable at high temperatures to be used. Preferred reactive dyestuffs that can be used are the halogen-containing triazinyl or vinyl group containing metallized azo dyestuffs (i.e., those metallized with chromium, nickel or copper). Such reactive dyestuffs have been commercially available for a number of years.

The preparation of modified synthetic polyamides according to the invention can be effected in a conventional manner, preferably by mixing the reactive compounds with molten synthetic polyamide, e.g. in an extruder prior to spinning, or before or during the polycondensation process of the synthetic amide itself.

Generally one uses 0.5 to 5 percent by weight of the compounds a) based on the weight of synthetic polyamides. More preferably 1 to 2 percent by weight of the compounds a) are used.

The synthetic polyamides according to the invention (i.e. containing a compound a)) are outstanding in many respects compared to synthetic polyamide which does not contain a compound a) - hereafter referred to as "untreated polyamide". When dyeing untreated polyamide and polyamide according to the invention with acid dyes is carried out (using the same quantity of dyestuffs on the substrate), a considerably deeper and more brilliant dyeing is obtained with the synthetic polyamides according to the invention than untreated polyamide. Bath exhaustion is noticeably better and the fastnesses, especially wet fastnesses, are improved.

If reactive dyes are used to dye synthetic polyamides according to the invention, in general between 0.05 and 5 percent by weight of the reactive dyes are used based on the weight of synthetic polyamides. More preferably the amounts of reactive dye used is between 0.1 and 3 percent by weight. The dyeings so obtained are also deeper than exhaust dyeings made with the same amount of dye on the untreated synthetic polyamide.

### EXAMPLES

In the following examples, all parts and percentages are by weight, and all temperatures are given in degrees celsius.

### Example 1

98 parts of poly-ε-caprolactam in granulate form are mixed in a drum mixer with 2 parts of the compound of formula Ia 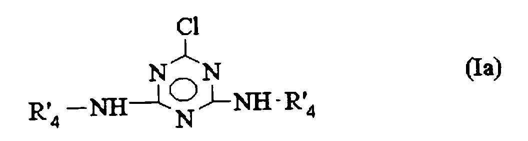 where R'₄ is 2,2,6,6-tetramethyl-piperidinyl-4,
(prepared by the condensation of 2 moles of 2,2,6,6-tetramethyl-4-aminopiperidine with 1 mol of 2,4,6-trichlorotriazine in 5 moles of toluene, after which the solution is boiled under reflux for 10 hours, the residue is filtered, washed with acetone, then heated with aqueous NaOH at pH 12, filtered, washed and dried) in powder form. The powder is mixed in a drum mixer and disperses very rapidly and very evenly and adheres to the granulate. After ca. 10 minutes, the mixture is dried for 8 hours at 120°, added to a melt spinning machine and spun at 275-280° under a nitrogen atmosphere, into fibres.

The fibres thus obtained may be dyed or printed by known processes tel quel or after processing into yarns, or woven or knit fabrics as is usual for polyamide fibre material, using the appropriate acid dyes, e.g. the dyes C.I. Acid Red 404, C.I. Acid Violet 66, C.I. Acid Blue 230, C.I. Acid Blue 129, C.I. Acid Yellow 129, C.I. Acid Red 119 or C.I. Acid Blue 80.

The dyeings thus obtained have increased depth of colour (compared with the same dyeing made on untreated poly-ε-caprolactam), a good brilliance and good wet fastness properties.

An appropriate amount of the following compounds may be incorporated into synthetic polyamide material as described in example 1 in place of the compound of formula Ia.

### Example 2

R'₄-NH-CO-CH=CH₂

### Example 3

R'₄-NH-CO-CH₂CH₂SO₂C₆H₅

### Example 4

R'₄-NH-SO₂-CH=CH₂

In Examples 1 to 4 R'₄ is 2,2,6,6-tetramethylpiperidinyl-4.

### Examples 5 - 7

The following compounds can be prepared by a method analogous to that of Example 1 from appropriate reactants.

### Example 5

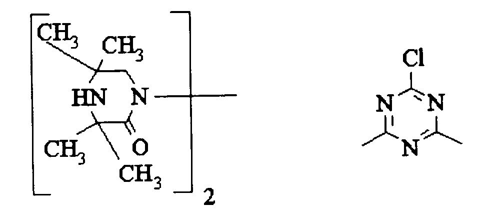

### Example 6

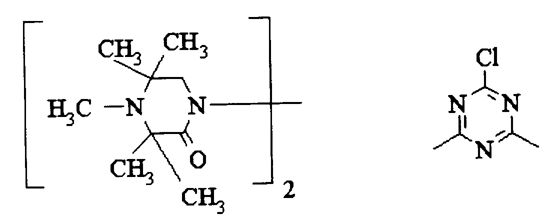

### Example 7

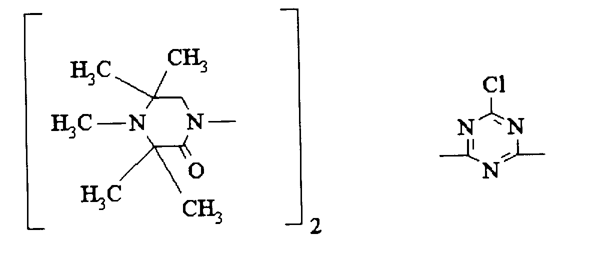

The products of Examples 5 to 7 can be worked into polyamide that can be used for spinning.

### Example 8

98 parts of a granulate of Nylon 6 is mixed for 1 hour with 2 % of 2-chloro-4,6-bis--(2', 2', 6', 6'-tetramethylpiperidyl-4-amino)triazine in a powder mixer (Rhoenrad), then this is treated in a laboratory extruder (MARIS TM 33 V/32 D) and it is then spun into fibres under the following conditions
Speed of the screw: 321
Rate of dosage: 40 %
Rate of extrusion: 23 kg/h
Pressure: 2 bar
Temperature in zone 1: 168°
   - 2-6:: 300°
   - 7 :: 259°
   - 8 :: 256°
   - 9 :: 263°

The resulting fibres can be used as such or can be used in the form of a yarn or web or piece such as polyamide fibre material. The fibres can be dyed with suitable acid dyes, for example
C.I. Acid Red 404,
C.I. Acid Violet 66,
C.I. Acid Yellow 129,
C.I. Acid Blue 129,
C.I. Acid Green 28,
C.I. Acid Red 119 or
C.I. Acid Blue 80.
Exhaust-Dyeing can be carried out by known methods. The fabrics can also be printed. The resulting dyeings show excellent depth of color (compared to the same dye without the modified poly-ε-caprolactam. They have good brilliance and good wet fastness properties.

### Example 9

1 mole of 2,4,6-trichlorotriazine can be condensed with 1 mole of 2,2,6,6-tetramethylene-4-aminopiperidine and 1 mole of 2,2,6,6-tetramethylpiperazine-3-one according to the method of Example 1.

The reaction product can be worked into poly-ε-caprolactam and the resulting polyamide fibres have good dyeing properties.

## Claims

1. Synthetic polyamide in which is incorporated
a) a compound having at least one sterically hindered amino group selected from the following compounds 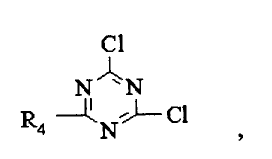 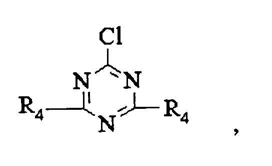
R₄-CO-CH=CH₂ ,
R₄-CO-CH₂CH₂SO₂C₆H₅
or
R₄-SO₂-CH=CH₂
in which R₄ independently is 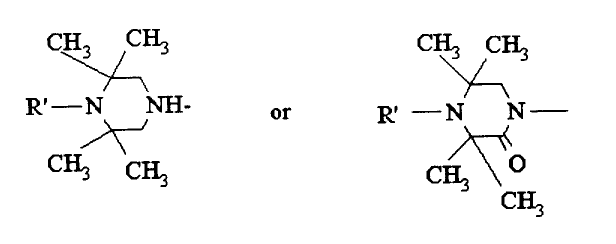 where R' is hydrogen, C₁₋₆alkyl, C₁₋₄alkoxy or -CO-C₁₋₄alkyl.

2. Synthetic polyamide according to claim 1 containing 0.5 to 5 percent by weight of the compounds a) based on the weight of synthetic polyamide.

3. A process which comprises dyeing or coloring in the mass a synthetic polyamide according to claim 1 or 2.

4. Synthetic polyamide in which is incorporated a compound of formula 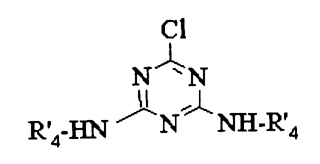 where R'₄ is 2,2,6,6-tetramethylpiperidinyl-4.

5. Synthetic polyamide in which is incorporated a compound of the formula 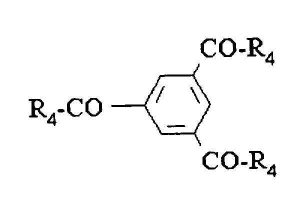 where R₄ is as defined in claim 1.

6. A compound of formula 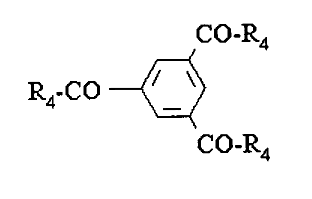 where R₄ is as defined in claim 1.

## Patentansprüche

1. Ein synthetisches Polyamid, worin
a) eine Verbindung, welche zumindest eine sterisch gehinderte Aminogruppe besitzt, ausgewählt aus den folgenden Verbindungen 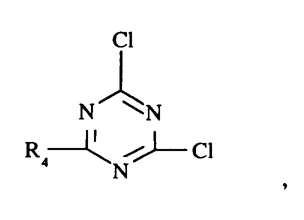 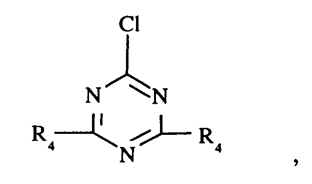
R₄-CO-CH=CH₂ ,
R₄-CO-CH₂CH₂SO₂C₆H₅
oder
R₄-SO₂-CH=CH₂
worin R₄ unabhängig für 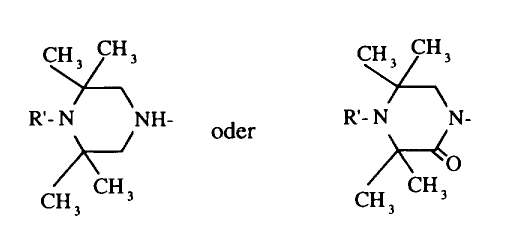 steht
worin R' Wasserstoff, C₁₋₆ Alkyl, C₁₋₄ Alkoxy oder -CO-C₁₋₄ Alkyl bedeutet eingearbeitet ist.

2. Ein synthetisches Polyamid gemäss Patentanspruch 1, enthaltend 0.5 bis 5 Gewichtsprozente der Verbindung a), bezogen auf das Gewicht des synthetischen Polyamids.

3. Ein Verfahren, welches das Färben oder die Färbung in der Masse eines synthetischen Polyamids, gemäss den Patentansprüchen 1 oder 2, umfasst.

4. Ein synthetisches Polyamid, worin eine Verbindung der Formel 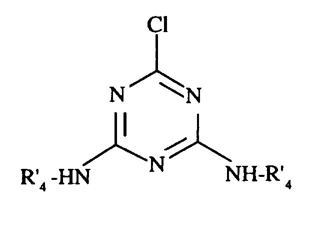 worin R'₄ 2,2,6,6-Tetramethylpiperidinyl4 bedeutet, eingearbeitet ist.

5. Ein synthetisches Polyamid, worin eine Verbindung der Formel 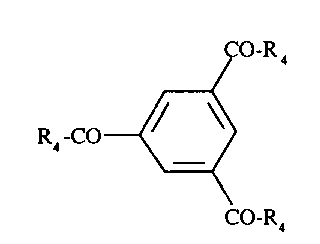 worin R₄ die im Patentanspruch 1 angegebene Bedeutung besitzt, eingearbeitet ist.

6. Eine Verbindung der Formel 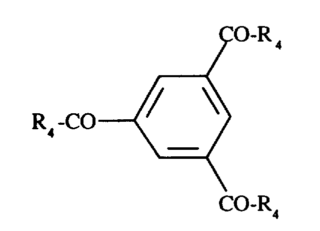 worin R₄ die im Patentanspruch 1 angegebene Bedeutung besitzt.

## Revendications

1. Un polyamide synthétique dans lequel on incorpore
a) un composé ayant au moins un groupe amino stériquement encombré choisi parmi les composés suivants 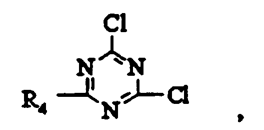 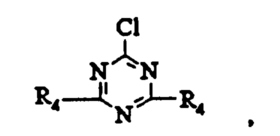
R₄-CO-CH=CH₂ ,
R₄-CO-CH₂CH₂SO₂C₆H₅
ou
R₄-SO₂-CH=CH₂
où R₄ signifie indépendamment 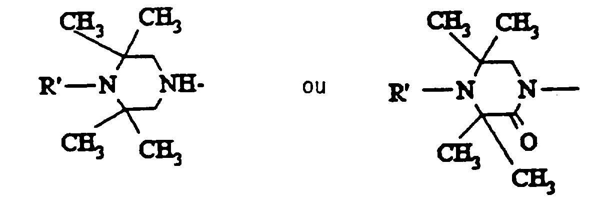 où R' signifie l'hydrogène ou un groupe alkyle en C₁-C₆, alcoxy en C₁-C₄ ou -CO-alkyle en C₁-C₄.

2. Un polyamide synthétique selon la revendication 1 contenant de 0,5 à 5% en poids de composés a) par rapport au poids du polyamide synthétique.

3. Un procédé qui comprend la teinture ou la coloration dans la masse d'un polyamide synthétique selon la revendication 1 ou 2.

4. Un polyamide synthétique dans lequel on incorpore un composé de formule 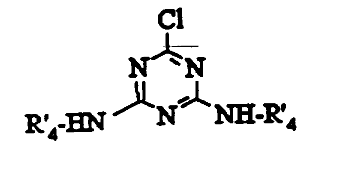 où R'₄ signifie un groupe 2,2,6,6-tétraméthylpipéridine-4-yle.

5. Un polyamide synthétique dans lequel on incorpore un composé de formule 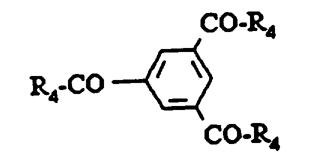 où R₄ est tel que défini à la revendication 1.

6. Un composé de formule 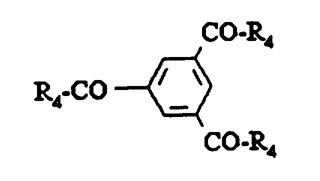 où R₄ est tel que défini à la revendication 1.
